# EUROPEAN PATENT APPLICATION

(11) **EP 4 436 187 A1**
(43) Date of publication of application: **25.09.2024**
(21) Application number: 21967384.5
(22) Date of filing: 06.12.2021
(51) Int. Cl.: H04N 21/43, H04N 21/466, H04N 21/64, H04N 21/858, H04N 21/81, H04L 51/00

(54) **ARTIFICIAL INTELLIGENCE DEVICE FOR SHARING CONTENT BETWEEN PLURALITY OF DISPLAY DEVICES, AND CONTENT SHARING METHOD**

(71) Applicant: LG Electronics Inc., Yeongdeungpo-gu Seoul 07336 (KR)
(72) Inventor: PARK, Taejin, Seoul 06772 (KR); KIM, Taewon, Seoul 06772 (KR)
(74) Representative: Frenkel, Matthias Alexander
(86) International application number: PCT/KR2021/095117
(87) International publication number: WO 2023/106512

(57) **Abstract**

Disclosed is a display device comprising: a communication interface for receiving first content information about first content being played back in the display device, and first content provider information; and a processor. The processor is for: generating a first cast message including the first content information and the first content provider information; setting a content casting application, to which the first cast message is to be delivered, to the multipurpose Internet mail extensions (MIME) type of the first cast message; and transmitting the first cast message to another artificial intelligence device through a social network application.

## Description

### [TECHNICAL FIELD]

The present disclosure relates to a content sharing system that enables content to be shared between a plurality of display devices, and an artificial intelligence device and a content sharing method therefor.

### [BACKGROUND ART]

A display device is a device having a function of receiving, processing, and displaying an image which a user is able to watch. The display device receives, for example, a broadcast signal selected by the user among broadcast signals transmitted from a broadcasting station, separates an image signal from the received signal, and displays the separated image signal on a display.

Meanwhile, with the development of social networks, the frequency with which various people communicate with each other is increasing. Additionally, the number of services that provide content has exploded recently, and the number of services that allow users in different spaces to share the content they are watching is increasing.

However, there are many cumbersome and inconvenient issues with the way users share content they are watching on a display device to users in different spaces.

### [DISCLOSURE OF INVENTION]

### [TECHNICAL PROBLEM]

The present disclosure provides a content sharing system and an artificial intelligence device that enable content information being played back on a display device and content provider information to be easily shared with other people through a social network application.

The present disclosure provides a content sharing system and an artificial intelligence device that enable content information to be shared such that content identical to content being played back on a first display device is viewed on another second display device.

### [TECHNICAL SOLUTION]

According to an embodiment of the present disclosure, an artificial intelligence device includes a communication interface configured to receive first content information and first content provider information about first content being played back in a display device, and a processor configured to generate a first cast message including the first content information and the first content provider information, set a content casting application, to which the first cast message is to be transferred, to a multipurpose Internet mail extensions (MIME) type of the first cast message, and transmit the first cast message to another artificial intelligence device through a social network application.

According to an embodiment, the first content provider information may include Uniform Resource Identifier (URI) information of a content provider application of a first content provider.

According to an embodiment, the first cast message may include the URI information of the content provider application included in the first content provider information in a body portion of the first cast message.

According to an embodiment, the MIME type may include information about a content casting-only application to which the first cast message is to be transferred.

According to an embodiment, the artificial intelligence device may include a processor configured to provide a user interface for selecting the social network application to be used to transmit the first cast message using a share sheet functionality provided in a predetermined operating system.

According to an embodiment, the artificial intelligence device may include a communication interface configured to receive a second cast message from the another artificial intelligence device via the social network application.

According to an embodiment, the artificial intelligence device may include a processor configured to obtain a user input for the second cast message from the social network application, execute the content casting application specified in a MIME type of the second cast message in response to the user input, transfer the second cast message to the content casting application, and transmit second content information and second content provider information included in the second cast message to the display device via the content casting application.

### [ADVANTAGEOUS EFFECTS]

The content sharing system and the artificial intelligence device according to an embodiment of the present disclosure enable content information and content provider information being played back on a display device to be easily shared with other people through a social network application.

The content sharing system and the artificial intelligence device according to an embodiment of the present disclosure enable content information to be shared such that content identical to content being played back on a first display device is viewed on another second display device.

### [BRIEF DESCRIPTION OF DRAWINGS]

FIG. 1 is a block diagram illustrating a configuration of a display device according to an embodiment of the present disclosure.
FIG. 2 is a block diagram of a remote control device according to an embodiment of the present disclosure.
FIG. 3 shows an example of an actual configuration of a remote control device according to an embodiment of the present disclosure.
FIG. 4 shows an example of using a remote control device according to an embodiment of the present disclosure.
FIG. 5 illustrates an AI device according to an embodiment of the present disclosure.
FIG. 6 is a diagram for describing a content sharing system according to an embodiment of the present disclosure.
FIG. 7 is a block diagram for describing a content sharing method according to an embodiment of the present disclosure.
FIG. 8 is a diagram for describing a content sharing method according to an embodiment of the present disclosure.
FIG. 9 is a flowchart for describing a content sharing method according to an embodiment of the present disclosure.
FIG. 10 is a diagram for describing a content sharing method by a content sharing system according to an embodiment of the present disclosure.

### [BEST MODE FOR CARRYING OUT THE INVENTION]

Hereinafter, embodiments of the present disclosure will be described in detail with reference to the drawings. The suffixes "module" and "unit or portion" for components used in the following description are merely provided only for facilitation of preparing this specification, and thus they are not granted a specific meaning or function.

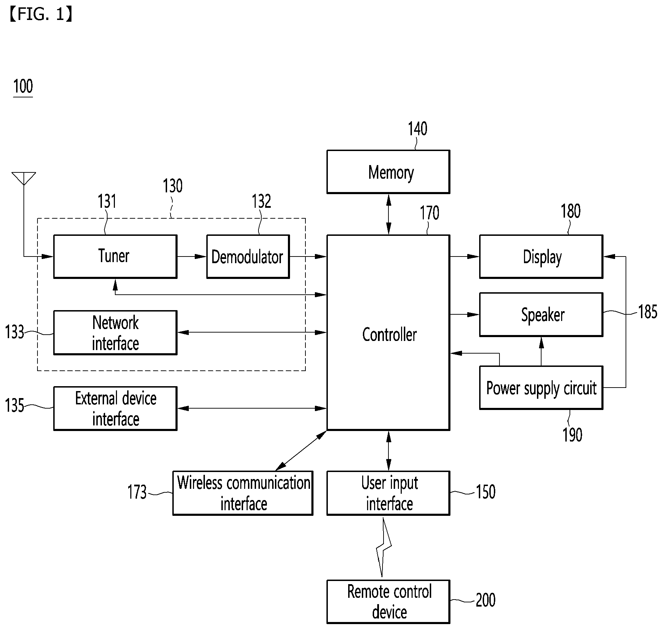

FIG. 1 is a block diagram illustrating a configuration of a display device according to an embodiment of the present disclosure.

Referring to FIG. 1, a display device 100 may include a broadcast receiver 130, an external device interface 135, a memory 140, a user input interface 150, a controller 170, a wireless communication interface 173, a microphone 175, a display 180, a speaker 185, and a power supply circuit 190.

The broadcast receiver 130 may include a tuner 131, a demodulator 132, and a network interface 133.

The tuner 131 may select a specific broadcast channel according to a channel selection command. The tuner 131 may receive a broadcast signal for the selected specific broadcast channel.

The demodulator 132 may separate the received broadcast signal into an image signal, an audio signal, and a data signal related to a broadcast program, and restore the separated image signal, auditory signal, and data signal to a format capable of being output.

The network interface 133 may provide an interface for connecting the display device 100 to a wired/wireless network including an Internet network. The network interface 133 may transmit or receive data to or from other users or other electronic devices through a connected network or another network linked to the connected network.

The network interface 133 may access a predetermined web page through the connected network or the other network linked to the connected network. That is, the network interface 133 may transmit or receive data to or from a corresponding server by accessing a predetermined webpage through the network.

In addition, the network interface 133 may receive content or data provided by a content provider or a network operator. That is, the network interface 133 may receive content such as movies, advertisements, games, VOD, and broadcast signals and information related thereto provided from a content provider or a network provider through a network.

In addition, the network interface 133 may receive update information and update files of firmware provided by the network operator, and may transmit data to an Internet or content provider or a network operator.

The network interface 133 may select and receive a desired application from among applications that are open to the public through a network.

The external device interface 135 may receive an application or a list of applications in an external device adjacent thereto, and transmit the same to the controller 170 or the memory 140.

The external device interface 135 may provide a connection path between the display device 100 and an external device. The external device interface 135 may receive one or more of images and audio output from an external device connected to the display device 100 in a wired or wireless manner, and transmit the same to the controller 170. The external device interface 135 may include a plurality of external input terminals. The plurality of external input terminals may include an RGB terminal, one or more High Definition Multimedia Interface (HDMI) terminals, and a component terminal.

The image signal of the external device input through the external device interface 135 may be output through the display 180. The audio signal of the external device input through the external device interface 135 may be output through the speaker 185.

The external device connectable to the external device interface 135 may be any one of a set-top box, a Blu-ray player, a DVD player, a game machine, a sound bar, a smartphone, a PC, a USB memory, and a home theater, but this is only an example..

In addition, a part of content data stored in the display device 100 may be transmitted to a selected user among a selected user or a selected electronic device among other users or other electronic devices registered in advance in the display device 100.

The memory 140 may store programs for signal processing and control of the controller 170, and may store images, audio, or data signals, which have been subjected to signal-processed.

In addition, the memory 140 may perform a function for temporarily storing images, audio, or data signals input from an external device interface 135 or the network interface 133, and store information on a predetermined image through a channel storage function.

The memory 140 may store an application or a list of applications input from the external device interface 135 or the network interface 133.

The display device 100 may play back a content file (a moving image file, a still image file, a music file, a document file, an application file, or the like) stored in the memory 140 and provide the same to the user.

The user input interface 150 may transmit a signal input by the user to the controller 170 or a signal from the controller 170 to the user. For example, the user input interface 150 may receive and process a control signal such as power on/off, channel selection, screen settings, and the like from the remote control device 200 in accordance with various communication methods, such as a Bluetooth communication method, a WB (Ultra Wideband) communication method, a ZigBee communication method, an RF (Radio Frequency) communication method, or an infrared (IR) communication method or may perform processing to transmit the control signal from the controller 170 to the remote control device 200.

In addition, the user input interface 150 may transmit a control signal input from a local key (not shown) such as a power key, a channel key, a volume key, and a setting value to the controller 170.

The image signal image-processed by the controller 170 may be input to the display 180 and displayed as an image corresponding to a corresponding image signal. Also, the image signal image-processed by the controller 170 may be input to an external output device through the external device interface 135.

The audio signal processed by the controller 170 may be output to the speaker 185. Also, the audio signal processed by the controller 170 may be input to the external output device through the external device interface 135.

In addition, the controller 170 may control the overall operation of the display device 100.

In addition, the controller 170 may control the display device 100 by a user command input through the user input interface 150 or an internal program and connect to a network to download an application a list of applications or applications desired by the user to the display device 100.

The controller 170 may allow the channel information or the like selected by the user to be output through the display 180 or the speaker 185 along with the processed image or audio signal.

In addition, the controller 170 may output an image signal or an audio signal through the display 180 or the speaker 185, according to a command for playing back an image of an external device through the user input interface 150, the image signal or the audio signal being input from an external device, for example, a camera or a camcorder, through the external device interface 135.

Meanwhile, the controller 170 may allow the display 180 to display an image, for example, allow a broadcast image which is input through the tuner 131 or an external input image which is input through the external device interface 135, an image which is input through the network interface or an image which is stored in the memory 140 to be displayed on the display 180. In this case, an image being displayed on the display 180 may be a still image or a moving image, and may be a 2D image or a 3D image.

In addition, the controller 170 may allow content stored in the display device 100, received broadcast content, or external input content input from the outside to be played back, and the content may have various forms such as a broadcast video, an external input video, an audio file, still images, accessed web screens, and document files.

The wireless communication interface 173 may communicate with an external device through wired or wireless communication. The wireless communication interface 173 may perform short range communication with an external device. To this end, the wireless communication interface 173 may support short range communication using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wi-Fi (Wireless-Fidelity), Wi-Fi(Wireless-Fidelity), Wi-Fi Direct, and Wireless USB (Wireless Universal Serial Bus) technologies. The wireless communication interface 173 may support wireless communication between the display device 100 and a wireless communication system, between the display device 100 and another display device 100, or between the display device 100 and a network in which the display device 100 (or an external server) is located through wireless area networks. The wireless area networks may be wireless personal area networks.

Here, the another display device 100 may be a wearable device (e.g., a smartwatch, smart glasses or a head mounted display (HMD), a mobile terminal such as a smart phone, which is able to exchange data (or interwork) with the display device 100 according to the present disclosure. The wireless communication interface 173 may detect (or recognize) a wearable device capable of communication around the display device 100. Furthermore, when the detected wearable device is an authenticated device to communicate with the display device 100 according to the present disclosure, the controller 170 may transmit at least a portion of data processed by the display device 100 to the wearable device through the wireless communication interface 173. Therefore, a user of the wearable device may use data processed by the display device 100 through the wearable device.

The microphone 175 may obtain an audio. The microphone 175 may include at least one microphone (not shown) and may acquire audio around the display device 100 through the microphone (not shown).

The display 180 may convert image signals, data signals, and OSD signals processed by the controller 170, or image signals or data signals received from the external device interface 135 into R, G, and B signals, and generate drive signals.

Furthermore, the display device 100 shown in FIG. 1 is just one embodiment of the present disclosure and thus, some of the illustrated components may be integrated, added, or omitted depending on the specification of the display device 100 that is actually implemented.

That is, two or more components may be combined into one component, or one component may be divided into two or more components as necessary. In addition, a function performed in each block is for describing an embodiment of the present disclosure, and its specific operation or device does not limit the scope of the present disclosure.

According to another embodiment of the present disclosure, unlike the display device 100 shown in FIG. 1, the display device 100 may receive an image through the network interface 133 or the external device interface 135 without a tuner 131 and a demodulator 132 and play back the same.

For example, the display device 100 may be divided into an image processing device, such as a set-top box, for receiving broadcast signals or content according to various network services, and a content playback device that plays content input from the image processing device.

In this case, an operation method of the display device according to an embodiment of the present disclosure will be described below may be implemented by not only the display device 100 as described with reference to FIG. 1 and but also one of an image processing device such as the separated set-top box and a content playback device including the display 180 and the speaker 185.

The speaker 185 may receive a signal audio-processed by the controller 170 and output the same with audio.

The power supply circuit 190 may supply corresponding power to the display device 100. Particularly, power may be supplied to the controller 170 that may be implemented in the form of a system on chip (SOC), the display 180 for image display, and the speaker 85 for audio output.

Specifically, the power supply circuit 190 may include a converter that converts AC power into DC power, and a dc/dc converter that converts a level of DC power.

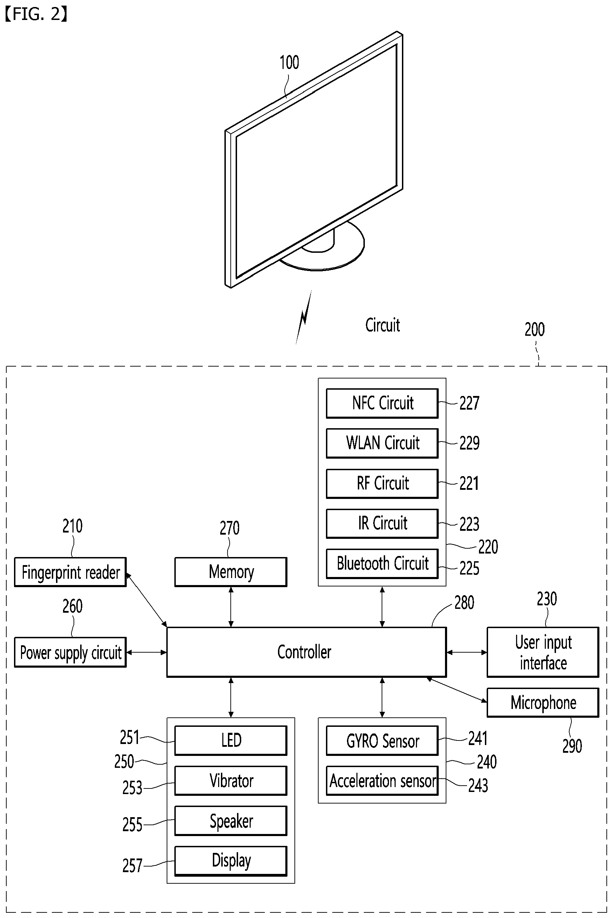

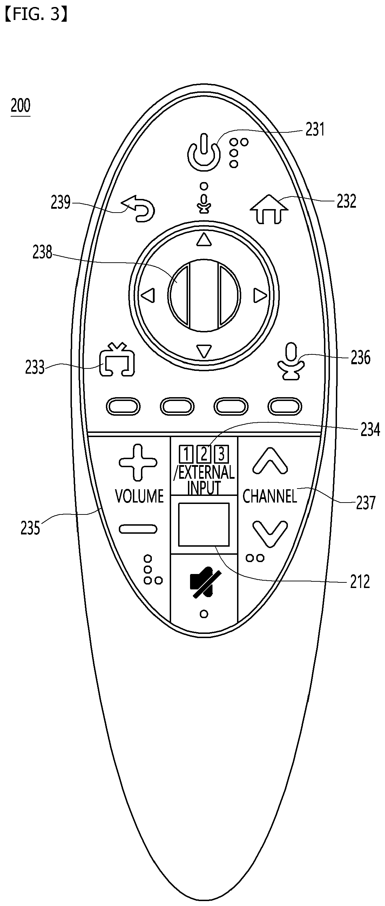

Then, referring to Figs. 2 and 3, a remote control device is described according to an embodiment of the present disclosure.

FIG. 2 is a block diagram of a remote control device according to an embodiment of the present disclosure, and FIG. 3 shows an actual configuration example of a remote control device according to an embodiment of the present disclosure.

First, referring to FIG. 2, the remote control device 200 may include a fingerprint reader 210, a wireless communication circuit 220, a user input interface 230, a sensor 240, an output interface 250, a power supply circuit 260, a memory 270, a controller 280, and a microphone 290.

Referring to FIG. 2, the wireless communication circuit 220 may transmit and receive signals to and from any one of display devices according to embodiments of the present disclosure described above.

The remote control device 200 may include an RF circuit 221 capable of transmitting and receiving signals to and from the display device 100 according to the RF communication standard, and an IR circuit 223 capable of transmitting and receiving signals to and from the display device 100 according to the IR communication standard. In addition, the remote control device 200 may include a Bluetooth circuit 225 capable of transmitting and receiving signals to and from the display device 100 according to the Bluetooth communication standard. In addition, the remote control device 200 may include an NFC circuit 227 capable of transmitting and receiving signals to and from the display device 100 according to the NFC (near field communication) communication standard, and a WLAN circuit 229 capable of transmitting and receiving signals to and from the display device 100 according to the wireless LAN (WLAN) communication standard.

In addition, the remote control device 200 may transmit a signal containing information on the movement of the remote control device 200 to the display device 100 through the wireless communication circuit 220.

In addition, the remote control device 200 may receive a signal transmitted by the display device 100 through the RF circuit 221, and transmit a command regarding power on/off, channel change, volume adjustment, or the like to the display device 100 through the IR circuit 223 as necessary.

The user input interface 230 may include a keypad, a button, a touch pad, a touch screen, or the like. The user may input a command related to the display device 100 to the remote control device 200 by operating the user input interface 230. When the user input interface 230 includes a hard key button, the user may input a command related to the display device 100 to the remote control device 200 through a push operation of the hard key button. Details will be described with reference to FIG. 3.

Referring to FIG. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back-play button 239.

The fingerprint recognition button 212 may be a button for recognizing a user's fingerprint. In one embodiment, the fingerprint recognition button 212 may enable a push operation, and thus may receive a push operation and a fingerprint recognition operation. The power button 231 may be a button for turning on/off the power of the display device 100. The home button 232 may be a button for moving to the home screen of the display device 100. The live button 233 may be a button for displaying a real-time broadcast program. The external input button 234 may be a button for receiving an external input connected to the display device 100. The volume control button 235 may be a button for adjusting the level of the volume output by the display device 100. The voice recognition button 236 may be a button for receiving a user's voice and recognizing the received voice. The channel change button 237 may be a button for receiving a broadcast signal of a specific broadcast channel. The OK button 238 may be a button for selecting a specific function, and the back-play button 239 may be a button for returning to a previous screen.

A description will be given referring again to FIG. 2.

When the user input interface 230 includes a touch screen, the user may input a command related to the display device 100 to the remote control device 200 by touching a soft key of the touch screen. In addition, the user input interface 230 may include various types of input means that may be operated by a user, such as a scroll key or a jog key, and the present embodiment does not limit the scope of the present disclosure.

The sensor 240 may include a gyro sensor 241 or an acceleration sensor 243, and the gyro sensor 241 may sense information regarding the movement of the remote control device 200.

For example, the gyro sensor 241 may sense information about the operation of the remote control device 200 based on the x, y, and z axes, and the acceleration sensor 243 may sense information about the moving speed of the remote control device 200. Meanwhile, the remote control device 200 may further include a distance measuring sensor to sense the distance between the display device 100 and the display 180.

The output interface 250 may output an image or audio signal corresponding to the operation of the user input interface 230 or a signal transmitted from the display device 100. The user may recognize whether the user input interface 230 is operated or whether the display device 100 is controlled through the output interface 250.

For example, the output interface 450 may include an LED 251 that emits light, a vibrator 253 that generates vibration, a speaker 255 that outputs sound, or a display 257 that outputs an image when the user input interface 230 is operated or a signal is transmitted and received to and from the display device 100 through the wireless communication interface 220.

In addition, the power supply circuit 260 may supply power to the remote control device 200, and stop power supply when the remote control device 200 has not moved for a predetermined time to reduce power consumption. The power supply circuit 260 may restart power supply when a predetermined key provided in the remote control device 200 is operated.

The memory 270 may store various types of programs and application data required for control or operation of the remote control device 200. When the remote control device 200 transmits and receives signals wirelessly through the display device 100 and the RF circuit 221, the remote control device 200 and the display device 100 transmit and receive signals through a predetermined frequency band.

The controller 280 of the remote control device 200 may store and refer to information on a frequency band capable of wirelessly transmitting and receiving signals to and from the display device 100 paired with the remote control device 200 in the memory 270.

The controller 280 may control all matters related to the control of the remote control device 200. The controller 280 may transmit a signal corresponding to a predetermined key operation of the user input interface 230 or a signal corresponding to the movement of the remote control device 200 sensed by the sensor 240 through the wireless communication interface 220.

Also, the microphone 290 of the remote control device 200 may obtain a voice.

The microphone 290 may include at least one microphone 291 and obtain speech through the microphone 291.

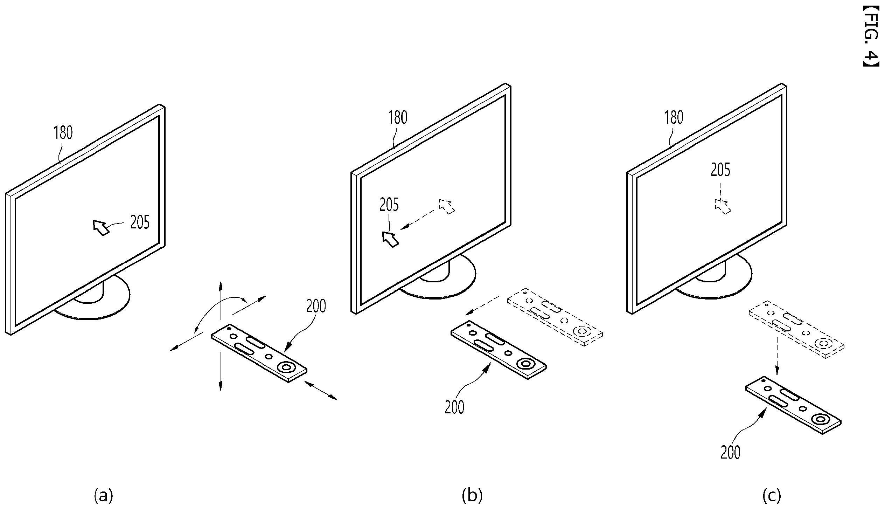

Next, a description will be given referring to FIG. 4.

FIG. 4 shows an example of using a remote control device according to an embodiment of the present disclosure.

In FIG. 4, (a) illustrates that a pointer 205 corresponding to the remote control device 200 is displayed on the display 180.

The user may move or rotate the remote control device 200 up, down, left and right. The pointer 205 displayed on the display 180 of the display device 100 may correspond to the movement of the remote control device 200. As shown in the drawings, the pointer 205 is moved and displayed according to movement of the remote control device 200 in a 3D space, so the remote control device 200 may be called a space remote control device.

In (b) of FIG. 4, it is illustrated that that when the user moves the remote control device 200 to the left, the pointer 205 displayed on the display 180 of the display device 100 moves to the left correspondingly.

Information on the movement of the remote control device 200 detected through a sensor of the remote control device 200 is transmitted to the display device 100. The display device 100 may calculate the coordinates of the pointer 205 based on information on the movement of the remote control device 200. The display device 100 may display the pointer 205 to correspond to the calculated coordinates.

In (c) of FIG. 4A, it is illustrated that a user moves the remote control device 200 away from the display 180 while pressing a specific button in the remote control device 200. Accordingly, a selected area in the display 180 corresponding to the pointer 205 may be zoomed in and displayed enlarged.

Conversely, when the user moves the remote control device 200 to be close to the display 180, the selected area in the display 180 corresponding to the pointer 205 may be zoomed out and displayed reduced.

On the other hand, when the remote control device 200 moves away from the display 180, the selected area may be zoomed out, and when the remote control device 200 moves to be close to the display 180, the selected area may be zoomed in.

Also, in a state in which a specific button in the remote control device 200 is being pressed, recognition of up, down, left, or right movements may be excluded. That is, when the remote control device 200 moves away from or close to the display 180, the up, down, left, or right movements are not recognized, and only the forward and backward movements may be recognized. In a state in which a specific button in the remote control device 200 is not being pressed, only the pointer 205 moves according to the up, down, left, or right movements of the remote control device 200.

Meanwhile, the movement speed or the movement direction of the pointer 205 may correspond to the movement speed or the movement direction of the remote control device 200.

Meanwhile, in the present specification, a pointer refers to an object displayed on the display 180 in response to an operation of the remote control device 200. Accordingly, objects of various shapes other than the arrow shape shown in the drawings are possible as the pointer 205. For example, the object may be a concept including a dot, a cursor, a prompt, a thick outline, and the like. In addition, the pointer 205 may be displayed corresponding to any one point among points on a horizontal axis and a vertical axis on the display 180, and may also be displayed corresponding to a plurality of points such as a line and a surface.

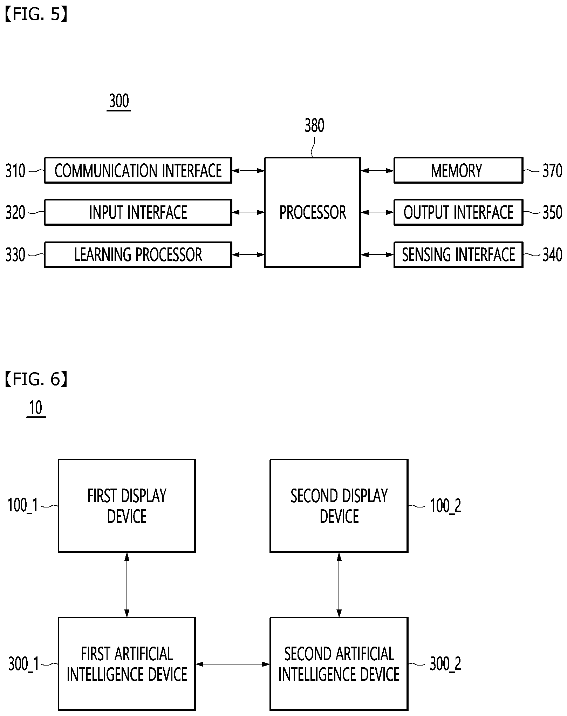

FIG. 5 illustrates an AI device 300 according to an embodiment of the present disclosure.

The AI device 300 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 5, the AI device 300 may include a communication interface 310, an input interface 320, a learning processor 330, a sensor 340, an output interface 350, a memory 370, and a processor 380.

The communication interface 310 may transmit/receive data to and from another AI device or external devices using wired/wireless communication technologies. For example, the communication interface 310 may transmit and receive sensor information, a user input, a learning model, and a control signal to and from external devices.

The communication technology used by the communication interface 310 includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input interface 320 may acquire various kinds of data.

In this case, the input interface 320 may include a camera for inputting a video signal, a microphone for receiving an audio signal, and a user input interface for receiving information from a user. The camera or the microphone may be treated as a sensor, and the signal acquired from the camera or the microphone may be referred to as sensing data or sensor information.

The input interface 320 may acquire a learning data for model learning and an input data to be used when an output is acquired by using learning model. The input interface 320 may acquire raw input data. In this case, the processor 380 or the learning processor 330 may extract an input feature by preprocessing the input data.

**The** learning processor 330 may train a model composed of an artificial neural network by using learning data. The learned artificial neural network may be referred to as a learning model. The learning model may be used to an infer result value for new input data rather than learning data, and the inferred value may be used as a basis for determination to perform a certain operation.

In this case, the learning processor 330 may include a memory integrated or implemented in the AI device 300. Alternatively, the learning processor 330 may be implemented by using the memory 370, an external memory directly connected to the AI device 300, or a memory held in an external device.

The sensor 340 may acquire at least one of internal information about the AI device 300, ambient environment information about the AI device 300, and user information by using various sensors.

Examples of the sensors included in the sensor 340 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output interface 350 may generate an output related to a visual sense, an audio sense, or a haptic sense.

In this case, the output interface 350 may include a display for outputting time information, a speaker for outputting audio information, and a haptic module for outputting haptic information.

The memory 370 may store data that supports various functions of the AI device 300. For example, the memory 370 may store input data acquired by the input interface 320, learning data, a learning model, a learning history, and the like.

The processor 380 may determine at least one executable operation of the AI device 300 based on information determined or generated by using a data analysis algorithm or a machine learning algorithm. The processor 380 may control the components of the AI device 300 to execute the determined operation.

To this end, the processor 380 may request, search, receive, or utilize data of the learning processor 330 or the memory 370. The processor 180 may control the components of the AI device 300 to execute the predicted operation or the operation determined to be desirable among the at least one executable operation.

When the connection of an external device is required to perform the determined operation, the processor 380 may generate a control signal for controlling the external device and may transmit the generated control signal to the external device.

The processor 380 may acquire intention information for the user input and may determine the user's requirements based on the acquired intention information.

In this case, the processor 380 may obtain intention information corresponding to a user input using at least one of a speech to text (STT) engine for converting a voice input into a character string or a natural language processing (NLP) engine for obtaining intention information of natural language.

At least one of the STT engine or the NLP engine may be configured as an artificial neural network, at least part of which is learned according to the machine learning algorithm. Also, at least one of the STT engine or the NLP engine may be trained by the learning processor 330.

The processor 380 may collect history information including the operation contents of the AI device 300 or the user's feedback on the operation and may store the collected history information in the memory 370 or the learning processor 330 or transmit the collected history information to the external device. The collected history information may be used to update the learning model.

The processor 380 may control at least part of the components of AI device 300 so as to drive an application program stored in memory 370. Furthermore, the processor 380 may operate two or more of the components included in the AI device 300 in combination so as to drive the application program.

Meanwhile, the communication interface 310 may be referred to as the network interface 310.

FIG. 6 is a block diagram for describing a content sharing system according to an embodiment of the present disclosure.

A content sharing system 10 may include a first display device 100_1, a second display device 100_2, a first artificial intelligence device 300_1, and a second artificial intelligence device 300_2.

The first display device 100_1 may play first content. Meanwhile, the first display device 100_1 and the first artificial intelligence device 300_1 may communicate with each other in a wired and wireless manner. The first artificial intelligence device 300_1 may have a content casting application installed herein, which is able to transmit and receive data with the first display device 100_1. The content casting application may be installed on the artificial intelligence device 300 and may transmit and receive certain information with the display device 100. The content casting application may request content playback by transmitting information about content from the artificial intelligence device 300 to the display device 100. Further, the content casting application may receive information about content from the display device 100 to the artificial intelligence device 300 and obtain information about content being played back on the display device 100.

Meanwhile, the first artificial intelligence device 300_1 may request to transmit information about the first content being played back on the first display device 100_1 through a content casting application. The first display device 100_1 may transmit information about the first content being played back to the first artificial intelligence device 300_1 in response to the request.

Meanwhile, the first artificial intelligence device 300_1 may transmit information about the received first content to the second artificial intelligence device 300_2.

Meanwhile, the second artificial intelligence device 300_2 may transmit first content to the second display device 100_2 and request the second display device to play back the first content based on the content casting application received from the first artificial intelligence device 300_1.

The second display device 100_2 may play the first content based on information about the received first content.

A method of sharing content with the second display device 100_2 in the first display device 100_1 will be described in detail below.

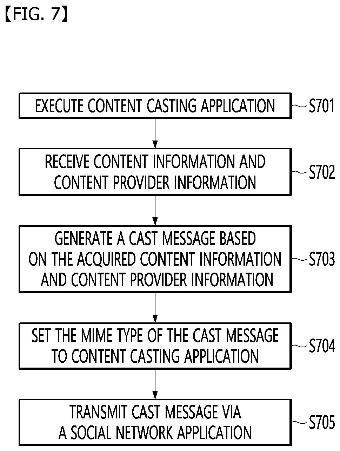

FIG. 7 is a block diagram for describing a content sharing method according to an embodiment of the present disclosure.

The processor 380 of the artificial intelligence device 300 may execute a content casting application (S701).

The content casting application may be an application that is installed on the artificial intelligence device 300 and is capable of transmitting and receiving certain information with the display device 100.

The processor 380 may receive content information and content provider information regarding content being played back on the display device 100 from an application via the communication interface 310 (S702). For example, the processor 380 may request a content casting application to transmit the content information and content provider information regarding the content being played back on the display device 100 and obtain the content information and the content provider information.

The content information may be metadata information about the content being played. For example, the content information may include at least one of a content ID, a content title, and a content genre. Meanwhile, the content provider information may be information about a content provider that provides content being played back on the display device 100. Additionally, the content provider information may include URI (Uniform Resource Identifier) information of a content provider application. For example, when the content provider application is executed on the display device 100 to play back content, the URI information of the content provider application may be included in the content provider information.

The processor 380 may generate a cast message based on the acquired content information and content provider information (S703).

The cast message may include the acquired content information and content provider information. The cast message may be a message used when the content casting application transmits information about content to the display device. The cast message may include the content information and the content provider information as parameter values. Also, the cast message may include a header portion and a body portion, and the URI information of the content provider application may be included in the body portion.

Meanwhile, the processor 380 may set the MIME (Multipurpose Internet Mail Extensions) type of the cast message to the content casting application (S704).

The processor 380 may set an application to receive the cast message by setting the MIME type of the cast message. By setting the content casting application as the MIME type of the cast message, the processor 380 may specify the content casting application as an application via which another artificial intelligence device that has received the content cast message is to transfer the cast message.

Meanwhile, the processor 380 may transmit a generated cast message via a social network application (S705).

The processor 380 may transmit a cast message to another artificial intelligence device through the communication interface 310 via a social network application (Social Networking Service Application).

Additionally, the processor 380 may provide a user interface for selecting a social network application to be used to transmit a cast message using the Share sheet function provided by the operating system.

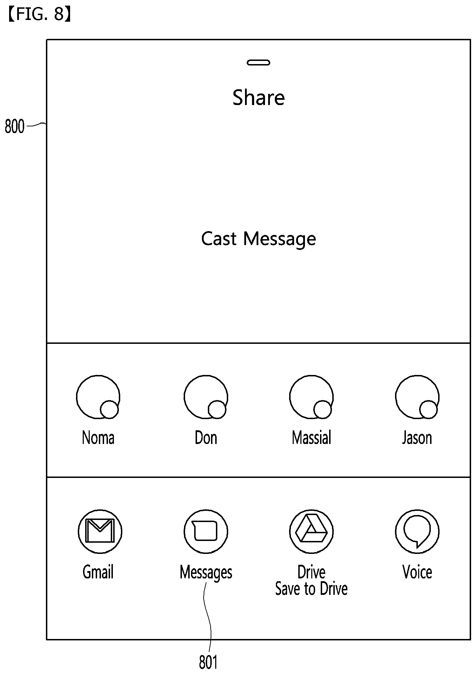

FIG. 8 is a diagram for describing a content sharing method according to an embodiment of the present disclosure.

Referring to FIG. 8, the processor 380 may activate a Share Sheet function provided by the operating system when a user inputs a selection of a function to share content with other users. Additionally, the processor 380 may provide a user interface 800 to select a social network application 801 to be used to transmit a cast message.

Accordingly, the processor 380 may transmit the cast message to other artificial intelligence devices via a social network application 801 selected by the user to share information about the content with other users.

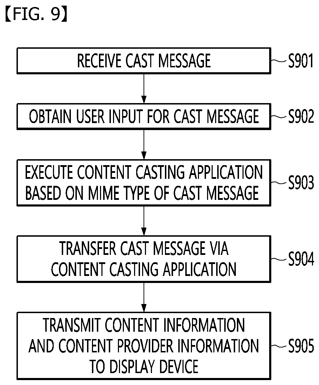

FIG. 9 is a flowchart for describing a content sharing method according to an embodiment of the present disclosure.

The processor 380 of the artificial intelligence device 100 may receive a cast message from another artificial intelligence device via the communication interface 310 (S901).

For example, when the cast message is transmitted via the social network application, processor 380 may receive the cast message transmitted via the social network application.

Meanwhile, the processor 380 may obtain a user input for the received cast message (S902).

For example, the processor 380 may obtain a user input for the cast message received via the social network application and obtain a command for the user to execute the cast message.

Additionally, the processor 380 may execute a content casting application specified in the MIME type based on the MIME type of the cast message received in response to the user input (S903). For example, when another artificial intelligence device transmits a cast message, the other artificial intelligence device may specify an application that is to receive the cast message as the MIME type of the cast message.

The processor 380 may execute an application to receive the cast message based on the MIME type of the cast message. Accordingly, a specific application to execute the cast message may be executed.

Meanwhile, the processor 380 may transfer the received cast message via the content casting application (S904). The processor 380 may execute the content casting application while transferring the received cast message as a parameter of the content casting application.

Meanwhile, the processor 380 may transmit content information and content provider information included in the cast message from the content casting application to the display device 100 through the communication interface 310 (S904).

The display device 100 may be a device paired with the artificial intelligence device 300 to transmit and receive data with each other through a content casting application.

The display device 100 may play back content requested from the artificial intelligence device 100 based on the received content information and content provider information.

Accordingly, it is possible to play back shared content based on a cast message shared from another artificial intelligence device.

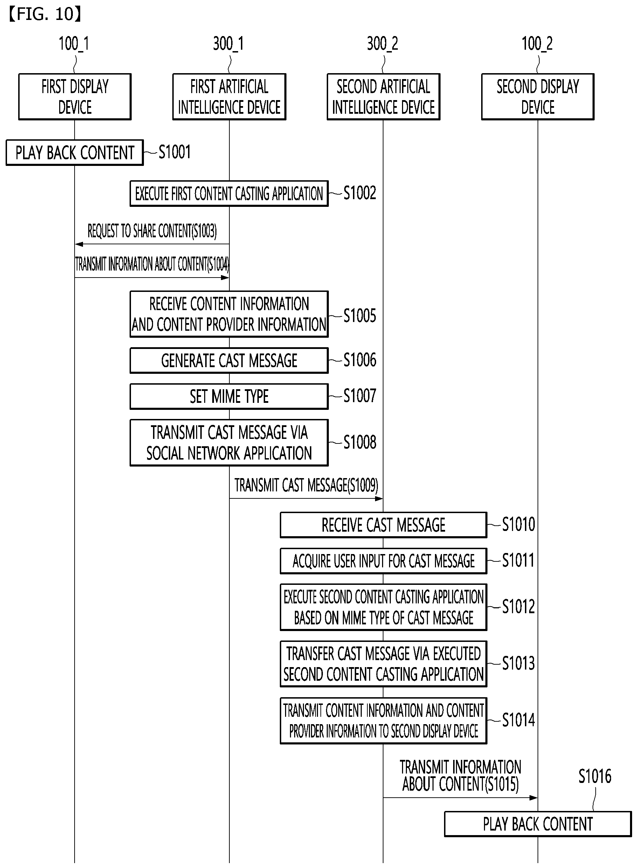

FIG. 10 is a diagram for describing a content sharing method using a content sharing system according to an embodiment of the present disclosure.

A first display device 100_1 may play back content (S1001). A user may want to share content being played back on the first display device 100_1 with other user for the other users to watch the same content. In this case, the first artificial intelligence device 300_1 may execute the first content casting application (S1002).

The first artificial intelligence device 300_1 may request content sharing from the first display device 100_1 (S1003). For example, the first artificial intelligence device 300_1 may request content sharing by requesting the first display device 100_1 to transfer information about the content being played.

Additionally, the first display device 100_1 may transmit the information about content to the first artificial intelligence device 300_1 (S1004). The information about content may include content information about the content being played back and content provider information.

The first artificial intelligence device 300_1 may receive the content information and the content provider information from the first display device 100_1 (S1005).

The first artificial intelligence device 300_1 may generate a cast message based on the content information and the content provider information (S1006).

Additionally, the first artificial intelligence device 300_1 may set the MIME type of the cast message (S1007). The first artificial intelligence device 300_1 may set an application that is to receive the cast message by setting the MIME type of the cast message. The first artificial intelligence device 300_1 may set the first content cast application as the MIME type of the cast message to specify a second content casting application as an application to transfer the cast message in a second artificial intelligence device 100_2, which later receives the content cast message.

Meanwhile, the first artificial intelligence device 300_1 may transmit the cast message to the second artificial intelligence device 300_2 via the social network application (S1008). Accordingly, the cast message may be transmitted to the second artificial intelligence device 300_2 (S1009).

Meanwhile, the second artificial intelligence device 300_2 may receive the cast message from the first artificial intelligence device 300_1 via a social network application (S1010). The second artificial intelligence device 300_2 may obtain a user input for the received cast message (S1011).

Meanwhile, the second artificial intelligence device 300_2 may execute the second content casting application based on the MIME type of the received cast message (S1012). Further, the second artificial intelligence device 300_2 may transmit the cast message as a parameter when executing the second content casting application (S1013).

Meanwhile, the second artificial intelligence device 300_2 may transmit content information and content provider information included in the cast message to the second display device 100_2 via the second content casting application (S1013). Accordingly, the content information and the content provider information may be transmitted to the second display device 100_2 (S1015).

Meanwhile, the second display device 100_2 may play back the content being played on the first display device 100_1 based on the received content information and content provider information (S1016).

The above description is merely illustrative of the technical idea of the present disclosure, and various modifications and variations may be made without departing from the essential characteristics of the present disclosure by those skilled in the art to which the present disclosure pertains.

Accordingly, the embodiment disclosed in the present disclosure is not intended to limit the technical idea of the present disclosure but to describe the present disclosure, and the scope of the technical idea of the present disclosure is not limited by the embodiment.

The scope of protection of the present disclosure should be interpreted by the following claims, and all technical ideas within the scope equivalent thereto should be construed as being included in the scope of the present disclosure.

## Claims

1. An artificial intelligence device comprising:
a communication interface configured to receive first content information and first content provider information about first content being played back in a display device; and
a processor configured to generate a first cast message including the first content information and the first content provider information, set a content casting application, to which the first cast message is to be transferred, to a multipurpose internet mail extensions (MIME) type of the first cast message, and transmit the first cast message to another artificial intelligence device through a social network application.

2. The artificial intelligence device of claim 1, wherein the first content provider information includes Uniform Resource Identifier (URI) information of a content provider application of a first content provider.

3. The artificial intelligence device of claim 2, wherein the first cast message includes the URI information of the content provider application included in the first content provider information in a body portion of the first cast message.

4. The artificial intelligence device of claim 1, wherein the MIME type includes information about a content casting-only application to which the first cast message is to be transferred.

5. The artificial intelligence device of claim 1, wherein the processor is configured to provide a user interface for selecting the social network application to be used to transmit the first cast message using a share sheet functionality provided in a predetermined operating system.

6. The artificial intelligence device of claim 1, wherein the communication interface is configured to receive a second cast message from the another artificial intelligence device via the social network application, and
wherein the processor is configured to obtain a user input for the second cast message from the social network application, execute the content casting application specified in a MIME type of the second cast message in response to the user input, transfer the second cast message to the content casting application, and transmit second content information and second content provider information included in the second cast message to the display device via the content casting application.

7. A content sharing method comprising:
receiving first content information and first content provider information about first content being played back in a display device;
generating a first cast message including the first content information and the first content provider information;
setting a content casting application, to which the first cast message is to be transferred, to a multipurpose internet mail extensions (MIME) type of the first cast message; and
transmitting the first cast message to another artificial intelligence device through a social network application.

8. The content sharing method of claim 7, wherein the first content provider information includes Uniform Resource Identifier (URI) information of a content provider application of a first content provider.

9. The content sharing method of claim 8, wherein the first cast message includes the URI information of the content provider application included in the first content provider information in a body portion of the first cast message.

10. The content sharing method of claim 7, wherein the MIME type includes information about a content casting-only application to which the first cast message is to be transferred.

11. The content sharing method of claim 7, wherein the processor is configured to, wherein the transmitting of the first cast message to the another artificial intelligence device includes providing a user interface for selecting the social network application to be used to transmit the first cast message using a share sheet functionality provided in a predetermined operating system.

12. The content sharing method of claim 7, further comprising:
receiving a second cast message from the another artificial intelligence device via the social network application;
obtaining a user input for the second cast message from the social network application;
executing the content casting application specified in a MIME type of the second cast message in response to the user input;
transferring the second cast message to the content casting application; and
transmitting second content information and second content provider information included in the second cast message to the display device via the content casting application.
